# EUROPÄISCHE PATENTSCHRIFT

(11) **EP 3 288 485 B1**
(45) Veröffentlichungstag und Bekanntmachung des Hinweises auf die Patenterteilung: **18.05.2022**
(21) Anmeldenummer: 16721725.6
(22) Anmeldetag: 22.04.2016
(51) Int. Cl.: B23B 49/00, B23B 51/04, B28D 1/04, B28D 7/00

(54) **INTELLIGENTE OBERFLÄCHENERKENNUNG UND KERNBOHRBEGINN**
INTELLIGENT SURFACE DETECTION AND CORE DRILLING BEGINNING
DÉTECTION DE SURFACE INTELLIGENTE ET DÉBUT DE CAROTTAGE

(30) Priorität: 28.04.2015 EP 15165314
(43) Veröffentlichungstag der Anmeldung: 07.03.2018
(73) Patentinhaber: Hilti Aktiengesellschaft, 9494 Schaan (LI)
(72) Erfinder: DREXL, Tobias, 86947 Weil (DE); HARTIG, Andreas, 86161 Augsburg (DE); SCHMALHOLZ, Thomas, 87600 Kaufbeuren (DE); LINK, Bernhard, 86986 Schwabbruck (DE); GOLUBOVIC, Goran, 86807 Buchloe (DE)
(74) Vertreter: Hilti Aktiengesellschaft Corporate Intellectual Property
(86) Internationale Anmeldenummer: PCT/EP2016/059014
(87) Internationale Veröffentlichungsnummer: WO 2016/173942

(56) Entgegenhaltungen:
- EP-A1- 1 443 176
- CN-A- 101 863 085
- DE-A1-102007 053 350
- DE-T2- 69 009 975

## Beschreibung

Die vorliegende Erfindung bezieht sich auf ein Regelverfahren zur Verwendung eines Kernbohrsystems enthaltend eine Kernbohrmaschine und eine Vorschubeinrichtung zum Antreiben der Kernbohrmaschine entlang einer Maschinenhalteeinrichtung.

EP 1 443 176 A1 offenbart ein Regelverfahren zur Verwendung eines Kernbohrsystems enthaltend eine Kernbohrmaschine und eine Vorschubeinrichtung zum Antreiben der Kernbohrmaschine entlang einer Maschinenhalteeinrichtung mit den folgenden Verfahrenschritten: Bewegen der Kernbohrmaschine in eine erste Richtung; Positionieren einer mit der Kernbohrmaschine verbundenen Bohrkrone auf die Oberfläche eines zu bearbeitenden mineralischen Werkstoffs zur Durchführung eines Kernbohrvorgangs; Aktivierung einer Regelung- und Steuerungseinrichtung zur Anpassung wenigstens eines vorbestimmten Bohrparameter in Abhängigkeit wenigstens eines vorbestimmten Parameters der Vorschubseinrichtung.

Zur Durchführung eines Kernbohrvorgangs wird für gewöhnlich eine mit einer Kernbohrmaschine verbundene Bohrkrone auf die Oberfläche eines zu bearbeitenden mineralischen Werkstoffs positioniert. Hierzu wird ein Wasserversorgungssystem, welches zum Spülen und Kühlen der Bohrkrone während des Kernbohrvorgangs dient, eingeschaltet und die Kernbohrmaschine überträgt ein Drehmoment auf die Bohrkrone, wodurch diese in eine Drehbewegung versetzt wird. Durch das übertragene Drehmoment schneiden die an dem unteren Ende der Bohrkrone angebrachten Schneidesegmente (auch Zähne genannt) ein Loch in den mineralischen Werkstoff.

Bei Beginn des Kernbohrvorgangs kann ein unkontrolliertes und zu schnelles Aufsetzten der Bohrkrone auf die Oberfläche des zu bearbeitenden mineralischen Werkstoffs jedoch gewisse Probleme hervorrufen. So kann dieses beispielsweise zu einem Verwinden des gesamten Kernbohrsystems, d.h. der Einheit aus Bohrkrone, Kernbohrmaschine und Maschinenhalteeinrichtung, führen. Ein derartiges Verwinden bewirkt, dass ungewollte Torsionskräfte mit erhöhten mechanischen Belastungen auf das gesamte Kernbohrsystem und insbesondere auf die Einheit von Kernbohrmaschine mit Bohrkrone einwirken. Darüber hinaus bewirkt das Verwinden ein ungenaues, d.h. nicht planes Aufsetzen der Bohrkrone auf die Oberfläche des mineralischen Werkstoffs, welches zu Ungenauigkeiten bei der Bestimmung der Bohrtiefe führen kann. Das ungewollte Verwinden wird besonders durch die Verwendung von Abstandshaltern (sog. Spacern) zwischen der Maschinenhalteeinrichtung und der Kernbohrmaschinen mit sehr großen Bohrkronen noch verstärkt.

Das Problem des ungewollten Verwindens wird bei Kernbohrmaschinen gemäß dem Stand der Technik mit herkömmlichen Regelungsverfahren dadurch gelöst, dass bei einem zu schnellen Aufsetzen der Bohrkrone auf der Oberfläche des mineralischen Werkstoffs die Bohrkrone samt Kernbohrmaschine mittels der Vorschubeinrichtung wieder von der Oberfläche entfernt wird, um die mechanische Belastung bzw. Spannung von dem Kernbohrsystem zu nehmen. Das erneute Aufnehmen und das plötzliche Entlastung der Bohrkrone sowie der Kernbohrmaschine haben jedoch zu Folge, dass das Kernbohrsystem dies als einen stark reduzierten Widerstand an der Bohrkrone wahrnimmt und die Vorschubeinrichtung daraufhin mit einem schnellen Vortrieb reagiert. Infolgedessen trifft die Bohrkrone mit einer zu hohen Geschwindigkeit auf die Oberfläche des mineralischen Werkstoffs. Hierdurch können die einzelnen Schneidesegmente, die Bohrkrone und/oder die Kernbohrmaschine beschädigt werden. Wenn das Kernbohrsystem das zu schnelle und zu harte Aufsetzen der Bohrkrone auf die Oberfläche des mineralischen Werkstoffs erfasst, wird die Bohrkrone samt Kernbohrmaschine mittels der Vorschubeinrichtung wieder von der Oberfläche entfernt. Die vorstehend beschriebene Prozedur beginnt daraufhin erneut. Es kommt zu einem ungewollten Aufschwingen des Regelungsverfahrens.

Des Weiteren besteht bei Kernbohrmaschinen gemäß dem Stand der Technik mit herkömmlichen Regelungsverfahren ein Problem darin, dass das Wasserversorgungssystem des Kernbohrsystems zum Spülen und Kühlen der Bohrkrone während des Kernbohrvorgangs ineffizient und viel zu früh, d.h. bevor die Bohrkrone tatsächlich gespült und/oder gekühlt werden muss, aktiviert wird. Dies führt oftmals zu einem zu hohen Wasserverbrauch während des Kernbohrvorgangs.

Es ist daher **Aufgabe** der vorliegenden Erfindung die vorstehend beschriebenen Probleme zu lösen und insbesondere ein Regelverfahren zur Verwendung eines Kernbohrsystems enthaltend eine Kernbohrmaschine und eine Vorschubeinrichtung zum Antreiben der Kernbohrmaschine entlang einer Maschinenhalteeinrichtung zur Verfügung zu stellen, mit dem ein ungewolltes Aufschwingen der Regelungseinrichtung des Kernbohrsystems zu Beginn des Kernbohrvorgangs verhindert wird. Des Weiteren besteht die Aufgabe der vorliegenden Erfindung darin, den Wasserverbrauch des Wasserversorgungssystems während des Kernbohrvorgangs zu reduzieren.

Die Aufgabe wird durch die Merkmale des unabhängigen Anspruchs 1 gelöst. Vorteilhafte Weiterentwicklungen der vorliegenden Erfindung ergeben sich aus den entsprechenden Unteransprüchen.

Demnach wird ein Regelverfahren bereitgestellt zur Verwendung eines Kernbohrsystems umfassend eine Kernbohrmaschine und eine Vorschubeinrichtung zum Antreiben der Kernbohrmaschine entlang einer Maschinenhalteeinrichtung.

Erfindungsgemäss enthält das Verfahren die Schritte
- Bewegen der Kernbohrmaschine in eine erste Richtung;
- Positionieren einer mit der Kernbohrmaschine verbundenen Bohrkrone auf die Oberfläche eines zu bearbeitenden mineralischen Werkstoffs zur Durchführung eines Kernbohrvorgangs;
- Erfassen der Position der Oberfläche des zu bearbeitenden Werkstoffs anhand eines Erreichens eines vorbestimmten Schwellwerts für wenigstens einen entsprechenden vorbestimmten Parameter der Vorschubeinrichtung in Form eines ersten Referenzwerts;
- Bewegen der Kernbohrmaschine in eine zweite Richtung;
- Betreiben der Kernbohrmaschine in einem vorbestimmten Anbohrmodus;
- Bewegen der Kernbohrmaschine in die erste Richtung;
- Erfassen der Position der Oberfläche des zu bearbeitenden Werkstoffs anhand eines Erreichens eines vorbestimmten Schwellwerts für wenigstens einen entsprechenden vorbestimmten Bohrparameter in Form eines zweiten Referenzwerts;
- Aktivierung einer Wasserversorgung; und
- Aktivierung einer Regelungseinrichtung zur Anpassung wenigstens eines vorbestimmten Bohrparameters in Abhängigkeit wenigstens eines vorbestimmten Parameters der Vorschubeinrichtung.

Gemäß einer vorteilhaften Ausführungsform der vorliegenden Erfindung kann es dienlich sein, dass der Bohrparameter einem Drehzahlwert eines Antriebs der Kernbohrmaschine, einem von dem Antrieb erzeugten und auf ein Bohrwerkzeug übertragenen Drehmomentwert oder einem Stromstärkenwert des Antriebs entspricht.

Entsprechend einer weiteren Ausführungsform der vorliegenden Erfindung kann es vorteilhaft sein, dass der vorbestimmte Schwellwert einem vorbestimmten prozentualen Anteil an dem entsprechenden Bohrparameter entspricht.

Die Erfindung wird bezüglich vorteilhafter Ausführungsbeispiele näher erläutert, hierbei zeigt
- Fig. 1: ein Kernbohrsystem mit einer Kernbohrmaschine, einer Vorschubeinrichtung und einer Maschinenhalteeinrichtung in einer Ausgangsposition;
- Fig. 2: das Kernbohrsystem mit der Kernbohrmaschine, der Vorschubeinrichtung und der Maschinenhalteeinrichtung zu Beginn eines Kernbohrvorgangs in einen mineralischen Werkstoff;
- Fig. 3: das Kernbohrsystem mit der Kernbohrmaschine, der Vorschubeinrichtung und der Maschinenhalteeinrichtung mit einer Bohrkrone in dem mineralischen Werkstoff;
- Fig. 4: das Kernbohrsystem mit der Kernbohrmaschine, der Vorschubeinrichtung und der Maschinenhalteeinrichtung mit der Bohrkrone beim einem Auftreffen auf ein Armierungseisen in dem mineralischen Werkstoff; und
- Fig. 5: das Kernbohrsystem mit der Kernbohrmaschine, der Vorschubeinrichtung und der Maschinenhalteeinrichtung mit der Bohrkrone nach einem Zerschneiden eines Armierungseisens in dem mineralischen Werkstoff.

### AUSFÜHRUNGSBEISPIEL:

### VORRICHTUNG:

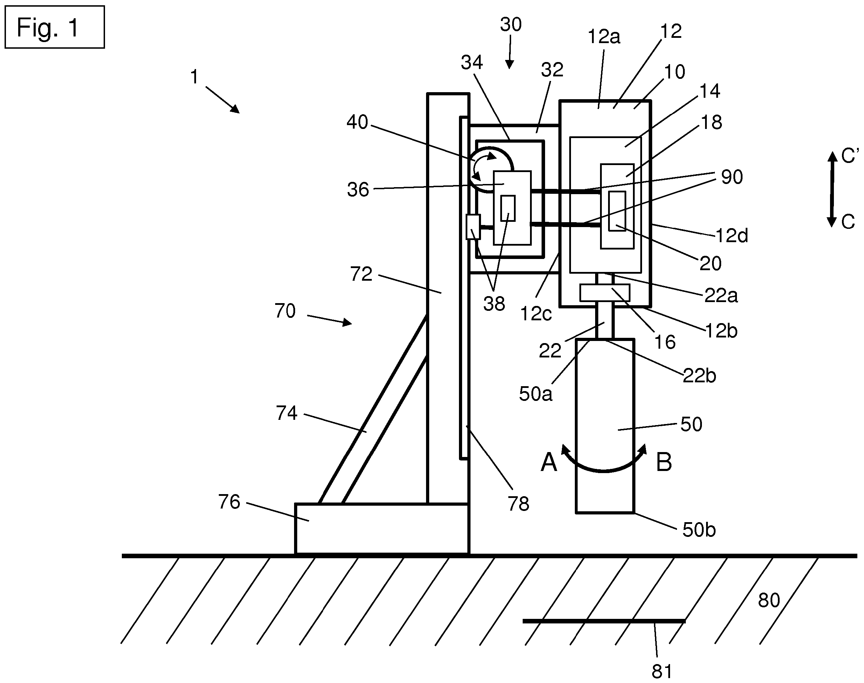

Fig. 1 zeigt ein Kernbohrsystem 1 als einen Zusammenschluss aus einer Kernbohrmaschine 10, einer Vorschubeinrichtung 30, einer Bohrkrone 50 und eine Maschinenhalteeinrichtung in Form eines Maschinenständers 70. Das Kernbohrsystem 1 enthält darüber hinaus eine Regelungseinrichtung zur Durchführen des Regelungsverfahrens. Das Kernbohrsystem 1 enthält des Weiteren ein nicht gezeigtes Wasserversorgungssystem zum Spülen und Kühlen der Bohrkrone 50 während des Kernbohrvorgangs.

Zum Spülen und Kühlen der Bohrkrone 50 strömt Wasser mittels eines nicht gezeigten Spülkopfes an einem ersten Ende 50a in die Bohrkrone 50 hinein und an einem zweiten Ende 50b aus der Bohrkrone 50 wieder hinaus. Das Wasser wäscht dabei abgetragene Gesteinsbrocken und Bohrschlamm aus der Bohrkrone 50 heraus.

Die Kernbohrmaschine 10 enthält ein Gehäuse 12, einen Antrieb 14, ein Getriebe 16, eine erste Regelungs- und Steuerungseinheit 18, Sensoren 20 und eine Antriebswelle 22. Der Antrieb 14 ist in Form eines Elektromotors gestaltet. Alternativ kann auch jede andere geeignete Antriebsart gewählt werden.

Gemäss einer speziellen Ausgestaltungsform kann der Antrieb 14 durch einen Hochfrequenzmotor gebildet sein.

Die erste Regelungs- und Steuerungseinheit 18 ist so ausgestaltet, dass diese sämtliche Parameter der Kernbohrmaschine 10 und insbesondere sämtliche Parameter des Antriebs 14, welche von den Sensoren 20 der Kernbohrmaschine 10 gemessen werden, erfasst. Zu diesen Parametern zählt beispielsweise der eingelegte Gang des Getriebes 16, die Drehzahl des Elektromotors 14, das von dem Elektromotor 14 erzeugte Drehmoment, die Drehzahl der Bohrkrone 50, die anliegende und/oder abgegebene Leistung des Elektromotors 14, die anliegende Stromstärke des Elektromotors 14, etc.

Das Gehäuse 12 weist eine obere Seite 12a, eine untere Seite 12b, eine linke Seite 12c und eine rechte Seite 12d auf. Der Antrieb 14 befindet sich im Inneren des Gehäuses 12.

Die Antriebswelle 22 weist ein erstes Ende 22a und ein zweites Ende 22b auf. Das erste Ende 22a der Antriebswelle 22 ist so mit dem Antrieb 14 verbunden, dass der als Elektromotor ausgestaltete Antrieb 14 die Antriebswelle 22 in eine erste Drehbewegung A oder zweite Drehbewegung B versetzen kann. Das zweite Ende 22b der Antriebswelle 22 ragt an der unteren Seite 12b des Gehäuses 12 aus der Kernbohrmaschine 10 heraus. Des Weiteren weist die Bohrkrone 50 ein erstes Ende 50a und ein zweites Ende 50b auf. An dem zweiten Ende 50b sind Schneidesegmente befestigt, die ein Schneiden in einen mineralischen Werkstoff 80 ermöglichen. Die Schneidesegmente sind dabei als einzelne Schneidezähne ausgebildet. Das erste Ende 50a der Bohrkrone 50 ist drehfest mit dem zweiten Ende 22b der Antriebswelle 22 verbunden. Über die Antriebswelle 22 kann die Kernbohrmaschine 10 die Bohrkrone 50 in die erste Drehbewegung A oder in die zweite Drehbewegung B versetzten.

Die Vorschubeinrichtung 30 enthält ein Gehäuse 32, in dem ein Vorschubantrieb 34, eine zweite Regelungs- und Steuerungseinheit 36, Sensoren 38 sowie ein Antriebsritzel 40 positioniert sind. Die zweite Regelungs- und Steuerungseinheit 36 ist so ausgestaltet, dass diese sämtliche Parameter der Vorschubeinrichtung 30 und insbesondere die Parameter des Vorschubantriebs 34, welche von den Sensoren 38 der Vorschubeinrichtung 30 gemessen werden, erfasst. Zu diesen gemessenen Parametern zählt beispielsweise die Vorschubgeschwindigkeit der Vorschubeinrichtung 30 zum Maschinenständer 70 bzw. Werkstück 80, die bereits zurückgelegte Wegstrecke der Vorschubeinrichtung 30 seit Beginn des Bohrvorgangs gemessen von einem zu definierenden Startpunkt (auch Nullpunkt genannt), die Position der Vorschubeinrichtung 30 entlang des Maschinenständers 70, der Drehwinkel des Vorschubantriebs 34, etc.

Darüber hinaus kann eine Vielzahl an Parametern von der Regelungs- und Steuerungseinheit 36 der Vorschubeinrichtung 30 berechnet werden. Die Parameterberechnung erfolgt dabei anhand eines Vergleichs zwischen den von den Sensoren 38 erfassten Parameter, wie z.B. dem Drehwinkel des Antriebsritzels 40, und den vorgegebenen (d.h. voreingestellten) Parametern. Aus der Parameterberechnung kann unter anderem die Vorschubgeschwindigkeit der Vorschubeinrichtung 30 zum Maschinenständer 70, die relative und/oder absolute Position der Vorschubeinrichtung 30, die bereits zurückgelegte Wegstrecke der Vorschubeinrichtung 30 seit Beginn des Bohrvorgangs sowie der Zeitpunkt und/oder die Wegstrecke bis zum Erreichen des Anschlags des Bohrwerkzeugs 50 ermittelt werden.

Der Vorschubantrieb 34 ist dabei, wie in Fig. 1 gezeigt, gemäss einer ersten Ausgestaltung in Form eines Elektromotors ausgestaltet.

Der Vorschubantrieb 34 treibt unter Kontrolle der Regelungs- und Steuerungseinheit 36 das Antriebsritzel 40 und damit die Vorschubeinrichtung 30 relativ zum Maschinenständer 70 an. Die Vorschubeinrichtung 30 ist derartig ausgestaltet, dass diese an den Maschinenständer 70 montiert werden kann (wie nachfolgend beschrieben) und mit Hilfe des Antriebsritzels 40 entlang des Maschinenständers 70 in eine erste Richtung C bewegt werden kann. Die Sensoren 38 sind in Gestalt von Winkel-, Drehwinkel-, Beschleunigungs-, Geschwindigkeits- bzw. Positionssensoren, und dabei so ausgestaltet, dass diese entweder inkrementell direkt am Vorschubantrieb 34 oder absolut entlang des Maschinenständers 70 die Beschleunigung, die Vorschubgeschwindigkeit, den Winkel, den Drehwinkel sowie die Position der Vorschubeinrichtung 30 erfassen.

Der Maschinenständer 70 enthält eine Führungsschiene 72, ein Verstrebungselement 74 sowie eine Grundplatte 76. Die Führungsschiene 72 ist so auf der Grundplatte 76 positioniert und von dem Verstrebungselement 74 gestützt, dass die Führungsschiene 72 vertikal oder im vorgegebenen Winkel ausgerichtet ist. Des Weiteren weist die Führungsschiene 72 an einer Seite eine Zahnstange 78 auf. Das Verstrebungselement 74 ist dabei optional und kann gemäss einer alternativen Ausgestaltungsform des Maschinenständers auch weggelassen sein.

Wie ebenfalls in Fig. 1 dargestellt, ist das Gehäuse 12 der Kernbohrmaschine 10 an dem Gehäuse 32 der Vorschubeinrichtung 30 befestigt.

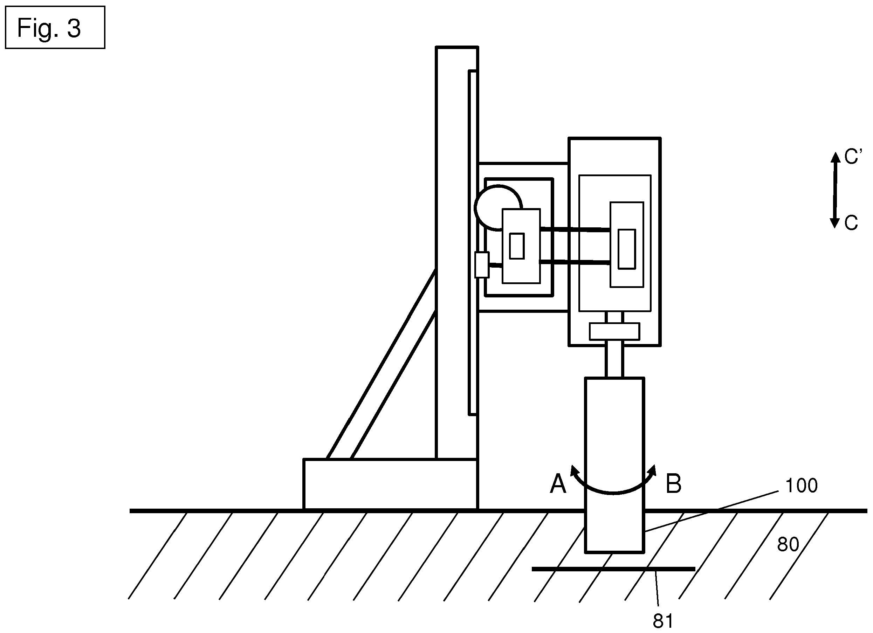

Die Vorschubeinrichtung 30 ist so an dem Maschinenständer 70 montiert, dass das Antriebsritzel 40 der Vorschubeinrichtung 30 in die Zahnstange 78 des Maschinenständers 70 eingreift. Wenn unter Kontrolle der Regelungs- und Steuerungseinheit 36 der Vorschubantrieb 34 das Antriebsritzel 40 in eine Drehbewegung versetzt, wird die Vorschubeinrichtung 30 reversibel entlang des Maschinenständers 70 in die erste Richtung C bzw. in die zweite Richtung C' bewegt. Dadurch, dass die Kernbohrmaschine 10 an der Vorschubeinrichtung 30 befestigt ist, wird durch das Bewegen der Vorschubeinrichtung 30 entlang des Maschinenständers 70 in Pfeilrichtung C auch die Kernbohrmaschine 10 entlang des Maschinenständers 70 in Pfeilrichtung C bewegt. Durch dieses vertikale Bewegen der Kernbohrmaschine 10 wird die an der Kernbohrmaschine 10 befestigte Bohrkrone 50 vertikal in das zu bearbeitenden Werkstück 80, d.h. in den Untergrund, befördert, wodurch ein Loch in das Werkstück 80 gebohrt wird. Der Werkstoff 80 ist dabei als mineralischer Werkstoff, insbesondere als Beton mit Armierungseisen 81 ausgestaltet. Wie bereits vorstehend beschrieben, messen die jeweiligen Sensoren 38 der Vorschubeinrichtung 30 die Parameter der Vorschubeinrichtung 30. Darüber hinaus messen die jeweiligen Sensoren 38 der Kernbohrmaschine 10 die Parameter der Kernbohrmaschine 10. Wie in Fig. 3 dargestellt, sind die Vorschubeinrichtung 30 sowie die Kernbohrmaschine 10 durch Verbindungselemente 90 derartig miteinander verbunden, dass sämtliche erfassbare Parameter der Vorschubeinrichtung 30 zu der Kernbohrmaschine 10 gesendet werden können und sämtliche erfassbare Parameter der Kernbohrmaschine 10 zu der Vorschubeinrichtung 30 gesendet werden können. Es liegt somit eine bidirektionale Kommunikation zwischen Vorschubeinrichtung 30 und der Kernbohrmaschine 10 vor. Aufgrund dieser bidirektionalen Kommunikation ist es unter anderem möglich, dass beispielsweise über einen nicht gezeigten Startschalter an der Kernbohrmaschine 10 die Vorschubeinrichtung 30 gestartet und in Betrieb genommen wird.

Darüber hinaus ist es insbesondere möglich, dass der Informationsfluss, d.h. die bidirektionale Übertragung der Parameter, zwischen der Vorschubeinrichtung 30 und der Kernbohrmaschine 10 mit Hilfe eines nicht gezeigten Stromkabels erfolgt. Gemäss einer vorteilhaften Ausgestaltungsform kann dabei die bidirektionale Übertragung der Parameter von dem Stromkabel 100 über die Kernbohrmaschine 10 zu der Vorschubeinrichtung 30 erfolgen.

### BOHRVORGANG:

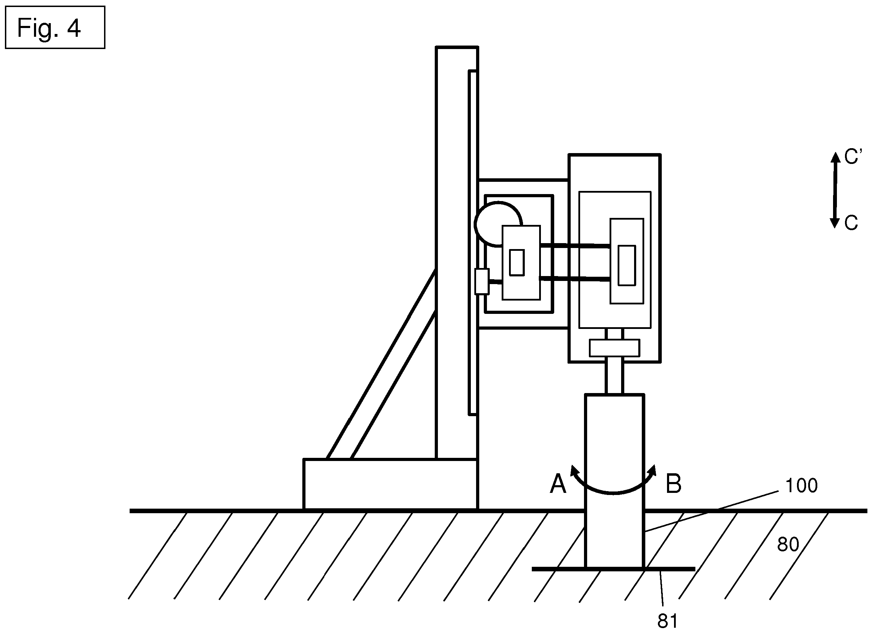

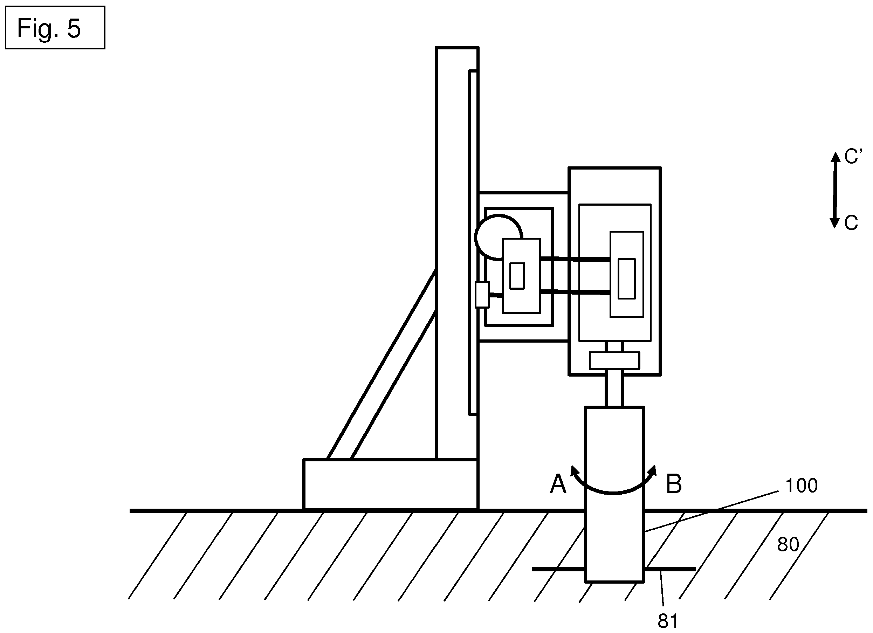

Wie bereits vorstehend beschrieben, ist in den Fig. 1 bis 5 ein Kernbohrsystem 1 schematisch dargestellt und ein Kernbohrvorgang zum Erzeugen eines Bohrlochs 100 in einen mineralischen Werkstoff 80 mit einzelnen Verfahrensschritten illustriert.

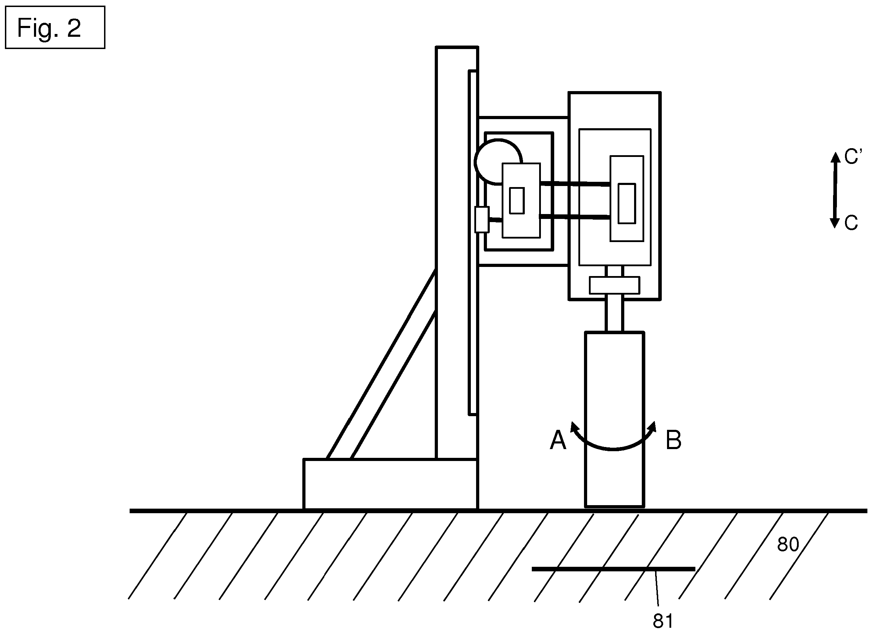

In Fig. 1 ist das Kernbohrsystem 1 zu Beginn eines Kernbohrvorgangs dargestellt. Die Bohrkrone 50 befindet sich hierzu oberhalb in der zweiten Richtung C' über dem Werkstoff 80. Die Vorschubeinrichtung 30 bewegt die Kernbohrmaschine 10 mit samt der Bohrkrone 50 langsam in die erste Richtung C bis das zweite Ende 50b der Bohrkrone 50 Kontakt mit der Oberfläche (O) des mineralischen Werkstoffs 80 hat (vgl. Fig. 2). Hierbei wird kein von dem Antrieb 14 erzeugtes Drehmoment auf die Bohrkrone 50 übertragen, sodass die Bohrkrone 50 nicht in eine Drehrichtung A oder B versetzt wird.

Darüber hinaus ist das Wasserversorgungssystem zum Spülen und Kühlen der Bohrkrone 50 während des Kernbohrvorgangs noch nicht aktiviert, sodass noch kein Wasser aus der Bohrkrone 50 austritt.

Bei dem Kontakt des zweiten Endes 50b der Bohrkrone 50 mit der Oberfläche (O) des mineralischen Werkstoffs 80 wird die Position der Oberfläche (O) in Form eines ersten Referenzwerts erfasst. Der erste Referenzwert wird dabei anhand der Position der Vorschubeinrichtung 30 in Relation zu dem Maschinenständer 70 erfasst.

Das Kernbohrsystem 1 ermittelt die Position der Oberfläche (O) des zu bearbeitenden Werkstoffs anhand des Erreichens eines vorbestimmten Schwellwerts für wenigstens einen entsprechenden vorbestimmten Parameter der Vorschubeinrichtung 30. Mit anderen Worten: das Kernbohrsystem 1 erfasst die Lage (bzw. Position) der Vorschubeinrichtung 30 in Relation zu dem Maschinenständer 70 als die Position der Oberfläche (O), wenn die Vorschubeinrichtung 30 für eine vorbestimmte Zeitdauer (d.h. 2 s) keinen weiteren Vortrieb an dem Maschinenständer 70 erreicht. Der Vortrieb der Vorschubeinrichtung 30 ist nämlich durch das Auftreffen der Bohrkrone 50 auf den harten mineralischen Werkstoff 80 gestoppt. Alternativ oder als Ergänzung hierzu kann das Kernbohrsystem 1 für die vorbestimmte Zeitdauer (d.h. 2 s) einen Anstieg des Motorstroms für den Vorschubantrieb 34 über einen vorbestimmten Schwellwert erkennen. Dieser Anstieg des Motorstroms wird durch den Widerstand der Bohrkrone 50 an dem harten mineralischen Werkstoff 80 verursacht.

Der vorbestimmte Schwellwert kann dabei einem vorbestimmten prozentualen Anteil an dem entsprechenden Bohrparameter entsprechen.

Anschließend wird die Bohrkrone 50 wieder von der Oberfläche (O) des mineralischen Werkstoffs 80 in Richtung C' bewegt. Das erneute Anheben der Bohrkrone 50 von der Oberfläche (O) dient dazu, um ein mögliches Verwinden des Kernbohrsystem 1 zu beseitigen, welches durch das Aufsetzen der Bohrkrone 50 auf die Oberfläche (O) erzeugt werden kann und welches eine mechanische Belastung bzw. Spannung in dem Kernbohrsystem 1 erzeugen kann. Die Bohrkrone 50 wird hierzu von der Vorschubeinrichtung 30 ungefähr 30 mm in die zweite Richtung C' bewegt.

Danach wird die Kernbohrmaschine 10 aktiviert und in einem vorbestimmten Anbohrmodus betrieben. In dem Anbohrmodus betreibt die Kernbohrmaschine 10 die Bohrkrone 50 mit einer Anbohrdrehgeschwindigkeit. Bei der Anbohrdrehgeschwindigkeit dreht die Bohrkrone 50 mit einer relativ langsamen Drehgeschwindigkeit, um ein relativ hohes Drehmoment von dem Antrieb 14 auf die Bohrkrone 50 zu übertragen. Durch die relativ niedrige Anbohrdrehgeschwindigkeit und das relativ hohe Drehmoment können die (nicht gezeigten) Schneidesegmente der Bohrkrone 50 besser in den mineralischen Werkstoff 80 einschneiden.

Die Vorschubeinrichtung 30 bewegt anschließend die in dem Anbohrmodus betriebene Kernbohrmaschine 10 zusammen mit der Bohrkrone 50 in die Richtung C und auf die Oberfläche (O) des mineralischen Werkstoffs 80 zu.

Wenn das zweite Ende 50b der Bohrkrone 50 die Oberfläche (O) des mineralischen Werkstoffs 80 berührt, wird die Position der Oberfläche (O) in Form eines zweiten Referenzwerts erfasst. Der zweite Referenzwert wird dabei anhand der Position der Vorschubeinrichtung 30 in Relation zu dem Maschinenständer 70 erfasst. Der zweite Referenzwert für die Position der Oberfläche (O) dient dem Kernbohrsystem 1 zur Überprüfung bzw. ggf. als Korrektur des ersten Referenzwerts sowie als eigentlicher Ausgangspunkt für die Messung der Bohrlochtiefe. Darüber hinaus dient der überprüfte und ggf. korrigierte Referenzpunkt als Ausgangs- bzw. Startpunkt für das

Das Kernbohrsystem 1 ermittelt die Position der Oberfläche (O) des zu bearbeitenden Werkstoffs anhand des Erreichens eines vorbestimmten Schwellwerts für wenigstens einen entsprechenden vorbestimmten Bohrparameter. Mit anderen Worten: das Kernbohrsystem 1 erfasst die Lage (bzw. Position) der Vorschubeinrichtung 30 in Relation zu dem Maschinenständer 70 als die Position der Oberfläche (O), wenn das von dem Antrieb 14 erzeugte und auf die Bohrkrone 50 übertragene Drehmoment für eine vorbestimmte Zeitdauer (d.h. 2 s) unter einen vorbestimmten Wert fällt. Das Drehmoment reduziert sich dadurch, dass die Bohrkrone 50 auf die Oberfläche (O) des mineralischen Werkstoffs trifft und diese durch den harten mineralischen Werkstoff 80 abgebremst wird. Alternativ oder als Ergänzung hierzu kann das Kernbohrsystem 1 für die vorbestimmte Zeitdauer (d.h. 2 s) einen Anstieg des Motorstroms für den Antrieb 14 der Kernbohrmaschine 10 über einen vorbestimmten Schwellwert erkennen. Dieser Anstieg des Motorstroms wird durch den Widerstand der Bohrkrone 50 an dem harten mineralischen Werkstoff 80 verursacht.

Wenn nun die im Anbohrmodus betriebene Bohrkrone 50 in den mineralischen Werkstoff 80 schneidet wird die Wasserversorgung aktiviert, sodass Wasser zum Spülen und Kühlen in die Bohrkrone 50 während des Kernbohrvorgangs gelangt.

Gleichzeitig bzw. unmittelbar danach wird die die Regelungs- und Steuerungseinrichtung 18, 36 zur Anpassung wenigstens eines vorbestimmten Bohrparameters in Abhängigkeit wenigstens eines vorbestimmten Parameters der Vorschubeinrichtung aktiviert.

Der Bohrparameter kann dabei einem Drehzahlwert eines Antriebs 14 der Kernbohrmaschine 10, einem von dem Antrieb 14 erzeugten und auf die Bohrkrone 50 übertragenen Drehmomentwert oder einem Stromstärkenwert des Antriebs 14 sein. Darüber hinaus kann der Bohrparameter einem Drehzahlwert des Vorschubantriebs 34, dem von dem Vorschubantrieb 34 erzeugten Drehmoment oder einem Stromstärkenwert des Vorschubantriebs 34 entsprechen.

Die Regelungs- und Steuerungseinrichtung 18, 36 steuert und regelt die Bohrparameter von der Kernbohrmaschine 10 sowie von der Vorschubeinrichtung 30 in Abhängigkeit zueinander.

## Patentansprüche

1. Regelverfahren zur Verwendung eines Kernbohrsystems (1) enthaltend eine Kernbohrmaschine (10) und eine Vorschubeinrichtung (30) zum Antreiben der Kernbohrmaschine (10) entlang einer Maschinenhalteeinrichtung (70), mit den folgenden Verfahrensschritten
- Bewegen der Kernbohrmaschine (10) in eine erste Richtung (C);
- Positionieren einer mit der Kernbohrmaschine (10) verbundenen Bohrkrone auf die Oberfläche (O) eines zu bearbeitenden mineralischen Werkstoffs (80) zur Durchführung eines Kernbohrvorgangs;
- Erfassen der Position der Oberfläche (O) des zu bearbeitenden Werkstoffs (80) anhand eines Erreichens eines vorbestimmten Schwellwerts für wenigstens einen entsprechenden vorbestimmten Parameter der Vorschubeinrichtung (30) in Form eines ersten Referenzwerts;
- Bewegen der Kernbohrmaschine (10) in eine zweite Richtung (C');
- Betreiben der Kernbohrmaschine (10) in einem vorbestimmten Anbohrmodus;
- Bewegen der Kernbohrmaschine (10) in die erste Richtung (C);
- Erfassen der Position der Oberfläche (O) des zu bearbeitenden Werkstoffs (80) anhand eines Erreichens eines vorbestimmten Schwellwerts für wenigstens einen entsprechenden vorbestimmten Bohrparameter in Form eines zweiten Referenzwerts;
- Aktivierung einer Wasserversorgung; und
- Aktivierung einer Regelungs- und Steuerungseinrichtung zur Anpassung wenigstens eines vorbestimmten Bohrparameters in Abhängigkeit wenigstens eines vorbestimmten Parameters der Vorschubeinrichtung (30).

2. Verfahren nach Anspruch 1,
wobei der Bohrparameter einem Drehzahlwert eines Antriebs (14) der Kernbohrmaschine (10), einem von dem Antrieb (14) erzeugten und auf ein Bohrwerkzeug (50) übertragenen Drehmomentwert oder einem Stromstärkenwert des Antriebs (14) entspricht.

3. Verfahren nach einem der Ansprüche 1 oder 2,
wobei der vorbestimmte Schwellwert einem vorbestimmten prozentualen Anteil an dem entsprechenden Bohrparameter entspricht.

## Claims

1. Control method for using a core drilling system (1) including a core drilling machine (10) and an advancing device (30) for driving the core drilling machine (10) along a machine-holding device (70), comprising the following method steps
- moving the core drilling machine (10) in a first direction (C);
- positioning a drill bit connected to the core drilling machine (10) onto the surface (O) of a mineral material (80) to be worked for carrying out a core drilling operation;
- detecting the position of the surface (O) of the material (80) to be worked on the basis of the reaching of a predetermined threshold value for at least one corresponding predetermined parameter of the advancing device (30) in the form of a first reference value;
- moving the core drilling machine (10) in a second direction (C');
- operating the core drilling machine (10) in a predetermined tapping mode;
- moving the core drilling machine (10) in the first direction (C);
- detecting the position of the surface (O) of the material (80) to be worked on the basis of the reaching of a predetermined threshold value for at least one corresponding predetermined drilling parameter in the form of a second reference value;
- activating a water supply; and
- activating an open-loop and closed-loop control device for adapting at least one predetermined drilling parameter in dependence on at least one predetermined parameter of the advancing device (30).

2. Method according to Claim 1,
wherein the drilling parameter corresponds to a rotational speed value of a drive (14) of the core drilling machine (10), a torque value generated by the drive (14) and transferred to a drilling tool (50) or a current intensity value of the drive (14).

3. Method according to either of Claims 1 and 2,
wherein the predetermined threshold value corresponds to a predetermined percentage of the corresponding drilling parameter.

## Revendications

1. Procédé de régulation destiné à l'utilisation d'un système de carottage (1), comportant une carotteuse (10) et un dispositif d'avance (30) servant à entraîner la carotteuse (10) le long d'un dispositif support de machine (70), comprenant les étapes de procédé suivantes consistant à
- déplacer la carotteuse (10) dans une première direction (C) ;
- positionner une couronne de forage reliée à la carotteuse (10) sur la surface (O) d'un matériau minéral (80) à traiter pour exécuter une opération de carottage ;
- détecter la position de la surface (O) du matériau (80) à traiter par le fait qu'une valeur seuil prédéterminée soit atteinte pour au moins un paramètre prédéterminé correspondant du dispositif d'avance (30) sous la forme d'une première valeur de référence ;
- déplacer la carotteuse (10) dans une deuxième direction (C') ;
- faire fonctionner la carotteuse (10) dans un mode amorce de forage prédéterminé ;
- déplacer la carotteuse (10) dans la première direction (C) ;
- détecter la position de la surface (O) du matériau (80) à traiter par le fait qu'une valeur seuil prédéterminée soit atteinte pour au moins un paramètre de forage prédéterminé correspondant sous la forme d'une deuxième valeur de référence ;
- activer une alimentation en eau ; et
- activer un dispositif de régulation et de commande pour adapter au moins un paramètre de forage prédéterminé en fonction d'au moins un paramètre prédéterminé du dispositif d'avance (30).

2. Procédé selon la revendication 1, dans lequel le paramètre de forage correspond à une valeur de vitesse de rotation d'un dispositif d'entraînement (14) de la carotteuse (10), à une valeur de couple produit par le dispositif d'entraînement (14) et transmis à un outil de forage (50) ou à une valeur d'intensité de courant du dispositif d'entraînement (14).

3. Procédé selon l'une quelconque des revendications 1 ou 2, dans lequel la valeur seuil prédéterminée correspond à un pourcentage prédéterminé du paramètre de sondage correspondant.
